Europäisches Patentamt

European Patent Office

Office européen des brevets

(11) Publication number: **0 307 249**
**A1**

## (12) EUROPEAN PATENT APPLICATION

(21) Application number: **88308403.0**

(22) Date of filing: **12.09.88**

(51) Int. Cl.⁴: **B 32 B 35/00**
**B 65 G 15/32, B 29 C 67/10,**
**C 08 L 77/00**

(30) Priority: **11.09.87 GB 8721469**

(43) Date of publication of application:
**15.03.89 Bulletin 89/11**

(84) Designated Contracting States:
**AT BE CH DE ES FR GB GR IT LI LU NL SE**

(71) Applicant: **LEP CHEMICAL LIMITED**
**P.O. Box 133 The Coach House Victoria Avenue**
**Harrogate North Yorkshire HG1 5RF (GB)**

(72) Inventor: **Foster, Ronald**
**43 Bury Old Road Ainsworth**
**Bolton Lancashire (GB)**

(74) Representative: **Wharton, Peter Robert et al**
**Urquhart-Dykes & Lord Alliance House 29-31 Kirkgate**
**Bradford West Yorkshire, BD1 1QB (GB)**

(54) Conveyor belt repairing.

(57) A method of repairing a mining conveyor belt comprises cutting out the damaged area of the belt leaving a key, applying a composition in the form of a solid, and melting the composition to fill the cut-out portion by means of a heat gun. The composition comprises a first thermoplastic polyamide and a minor portion of a second thermoplastic polyamide having good adhesion characteristics with, optionally, a high molecular weight primary monohydric alcohol derived from rosin acids that have been hydrogenated to reduce unsaturation. Preferably the composition is formulated in two-pack form with the first pack having more of the second thermoplastic polyamide to promote adhesion and the second pack having more of the first polyamide to increase durability.

EP 0 307 249 A1

## Description

## CONVEYOR BELT REPAIRING

This invention relates to a method and product for the repairing of conveyor belts.

Conveyor belts are widely used in the coal and ore mining and conveying industries. Such conveyors may be very large, typically several kilometres in length, and transmit large quantities of material. Owing to the nature of the products transported damage frequently occurs to the conveyor belts. Since the whole belt must be halted in order to effect a repair it is obviously vital that such repairs can be carried out as speedily as possible.

Current chemical repair systems to such belts involve extensive preparatory work through belt cleaning (normally using a solvent) followed by priming and then the application of a top coat. This is time consuming particularly when it is remembered that each stage must be allowed to cure before moving on to the next one. The systems normally employed have two-component top coats which leads to further problems: firstly all the material must be used once it has been mixed together, and in the case of low ambient temperatures the product needs to be stored in a warm area prior to application or it becomes too thick to mix and apply.

An alternative method of repairing such belts is to "vulcanise" the belt but this normally requires specialised equipment and is typically carried out by outside contractors with associated time and cost penalties.

The invention seeks to provide a method and a composition improved in the above respects which enables a speedy repair to be effected without the need of specialist equipment and without the mixing of chemicals.

According to the present invention there is provided a composition for use in repairing conveyor belts which comprises a first thermoplastic polyamide, a minor proportion of a second thermoplastic polyamide having good adhesion characteristics, and, optionally, a high molecular weight primary monohydric alcohol derived from rosin acids that have been hydrogenated to reduce unsaturation.

Preferably the first thermoplastic polyamide is present in a proportion of at least 60%. The second thermoplastic is present in a proportion of up to 40%, preferably between 10% and 20%. The high molecular primary monohydric alcohol derived from rosin acids is preferably present and in a concentration of between 5% and 15%, typically 6% to 10%. In addition, minor amounts of normal additives may be present such as, for example, antioxidants, pigments, and the like.

The first thermoplastic polyamide is preferably a tough low molecular weight nylon. A particularly effective compound useful in the present invention is that sold under the trade name VERSALON 1138 (Henkel) which has high elongation, low modulus and good thermal stability.

The second thermoplastic polymide is chosen so as to have good adhesion property and proprietory resins sold for use in printing ink formulations have been found useful in this respect. In particular thermoplastic polyamides available under the trade name VERSAMID (Henkel) have been found useful in the practice of the invention in particular VERSAMID 758 and VERSAMID 100.

The high molecular weight primary monohydric alcohol is present as a plasticizer which lowers the molten viscosity of the composition and improves the flow thereof. It also increases the adhesiveness of the composition and improves the low temperature qualities of the repair made with it. Accordingly it is preferred that this plasticiser is included in the composition. A particular proprietory compound suitable in this respect is available under the trade name ABITOL (Hercules) which is technical hydroabietyl alcohol.

While the composition of the invention may be used on its own it is preferred to supply it as a "two-pack" system. Each "pack" will be a composition in accordance with the invention above but one will be formulated with less of the first polyamide and more of the second so as to increase its flexibility at some loss of durability, and the second will have a higher proportion of the first polyamide to increase its durability at some loss of flexibility. The first "pack" would be applied to the repair first as a "primer" after which the second pack is applied to finish the repair.

The invention therefore also provides a method of repairing a conveyor belt which comprises cutting out the damaged area of the belt leaving a key, applying composition of the invention in the form of a solid, and melting the composition to fill the cut out portion by means of a heat gun.

Where the composition is in its preferred two-pack form, the primer is applied first to the cut-out portion, melted until it coats the cut-out portion and allowed to harden for a short time before the second pack is applied and melted to complete the repair. Preferably the composition in each of the two packs is coloured differently to facilitate identification. It will be appreciated that no mixing is required even with the two pack system: the primer coat is melted in place, allowed to dry for a short period, typically two minutes, and then the top coat is melted in place to complete the repair.

The invention will be illustrated further by the following example.

### EXAMPLE

A two-pack composition in accordance with the invention was formulated as follows:

**PRIMER COMPOSITION**

| | |
|---|---|
| Versalon 1138 (Henkel) | 75% |
| Versamid 100 | 15% |
| Abitol | 10% |
| Irganox 1010 (antioxidant) | 0.5% |
| Bayferrox 110M (pigment) | 0.2% |

**TOP COAT**

Versalon 1138 (Henkel)  80%
Versamid 758  5/%
Versamin 100  9%
Abitol  6%
Irganox 1010  0.5%
Bayferrox 318M  0.2%

Both the above formulations were made by hotmelting and allowing to solidify thereafter breaking up the product into granules. The primer coat granules are coloured red by the BAYFERROX 110M, and the top coat granules are coloured black by the BAYFERROX 318M.

In order to carry out a repair on a conveyor belt the damaged top surface (usually rubber) is removed with a knife down to the belt carcass. The rubber is cut away leaving the sides sloped inwardly to give a dovetail or key to the finished repair. The area round the cut out portion is then warmed using a hot air gun or blow lamp to remove any moisture and condition the belt. Granules of the red primer composition are scattered into the cut out portion and the air gun or blow lamp applied again until they melt and evenly coat all of the area to be repaired, particularly the dovetail sides. Sufficient is used to give a light coating only. After allowing the primer to cool for approximately two mintues the black top coat granules are applied and melted down to a liquid again using the hot air gun or equivalent. Sufficient granules are employed to fill the worn area. 30 minutes is allowed for the compositions fully to cure after which the belt may then be run. The whole repair therefore takes rather less than an hour to complete and the only equipment needed is a blow lamp or hot air gun.

The tear strength and heat resistance of the repair is excellent and the composition will operate down to -20° C, although lower temperature operation can be achieved by suitable formulation. The impact resistance of the finished repair is excellent and the repair is both durable and sufficiently flexible not to pull away from the belt body.

The invention therefore provides a simple, economical and efficient composition for a method of effecting repairs to conveyor belts in the minimum time.

**Claims**

1. A composition for use in repairing conveyor belts which comprises a first thermoplastic polyamide and a minor proportion of a second thermoplastic polyamide having good adhesion characteristics.

2. A composition as claimed in claim 1 additionally containing a high molecular weight primary monohydric alcohol derived from rosin acids that have been hydrogenated to reduce unsaturation.

3. A composition as claimed in either of claims 1 or 2 in which the first thermoplastic polyamide is present in a proportion of at least 60%.

4. A composition as claimed in any of claims 1 to 3 in which the second thermoplastic is present in a proportion of up to 40%.

5. A composition as claimed in any of claims 1 to 4 in which the second thermoplastic is present in a proportion of between 10% and 20%.

6. A composition as claimed in any of claims 1 to 5 in which the high molecular weight primary monohydric alcohol is present in a concentration of between 5% and 15%, preferably 6% to 10%.

7. A composition as claimed in any of claims 1 to 6 in which the first thermoplastic polyamide is a low molecular weight nylon having high elongation low modulus and good thermal stability.

8. A method of repairing a conveyor belt which comprises cutting out the damaged area of the belt leaving a key, applying a composition according to any of claims 1 to 7 in the form of a solid, and melting the composition to fill out the cut portion by means of a heat gun.

9. A method as claimed in claim 8 in which the composition is supplied in two-pack form, one pack being formulated with less of the first polyamide and more of the second so as to increase its flexibility and the second pack being formulated to have a high proportion of the first polyamide to increase its durability.

10. A method as claimed in claim 9 in which the first pack is applied to the cut-out portion, melted until it coats the cut-out portion and allowed to harden for a short time before the second pack is applied and melted to complete the repair.

11. A method as claimed in claim 10 in which the primer coat or first pack is allowed to dry for about two minutes until the second pack is applied and melted in place to complete the repair.

12. A method as claimed in any of claims 9 to 11 in which a conveyor belt has its damaged top surface removed with a knife down to the belt carcass leaving the sides sloped inwardly to provide the key for the finished repair and the area round the cut-out portion is then warmed using a hot air gun or blow lamp to remove any moisture and condition the belt for application of the composition.

## DOCUMENTS CONSIDERED TO BE RELEVANT

EP 88308403.0

| Category | Citation of document with indication, where appropriate, of relevant passages | Relevant to claim | CLASSIFICATION OF THE APPLICATION (Int. Cl.4) |
|---|---|---|---|
| P,Y | DE - A1 - 3 608 755 (PHOENIX AG) <br> * Claims * <br> -- | 1,8 | B 32 B 35/00 <br><br> B 65 G 15/32 |
| X,Y | US - A - 4 404 317 (EPSTEIN et al.) <br> * Claims; column 2, lines 23-30 * <br> -- | 1,3-5, 7 | B 29 C 67/10 <br><br> C 08 L 77/00 |
| X | US - A - 4 387 184 (COQUARD et al.) <br> * Claims * <br> -- | 1,3-5, 7 | |
| A | DD - A - 64 246 (MARTIN JURDECZKA) <br> * Claim * <br> ---- | 1,8 | |

TECHNICAL FIELDS SEARCHED (Int. Cl.4)

B 32 B

B 65 G

B 29 C

C 08 L 77/00

B 29 D

C 08 J

The present search report has been drawn up for all claims

| Place of search | Date of completion of the search | Examiner |
|---|---|---|
| VIENNA | 13-12-1988 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82